# DEMANDE DE BREVET EUROPEEN

(11) **EP 1 557 686 A1**
(43) Date de publication de la demande: **27.07.2005**
(21) Numéro de dépôt: 05290059.4
(22) Date de dépôt: 10.01.2005
(51) Int. Cl.: G01S 1/00

(54) **Localisation assistée, par établissement d'un canal de transport USSD, de terminaux mobiles de communication d'un réseau cellulaire, pour un centre d'appels**

(30) Priorité: 26.01.2004 FR 0450133
(71) Demandeur: ALCATEL, 75008 Paris (FR)
(72) Inventeur: Tang-Taye, Jacky, 78490 Montfort l'Amaury (FR)
(74) Mandataire: Vigand, Régis Louis Michel

(57) **Abrégé**

Une installation de communications comprend un réseau cellulaire de communications, un réseau de positionnement par satellites couplé à un serveur de données d'assistance, lui-même couplé au réseau cellulaire, et des terminaux mobiles de communication (T) couplés au réseau cellulaire et comprenant un dispositif de positionnement par satellites assisté (D) couplé au réseau de positionnement et au serveur. Les terminaux mobiles (T) comprennent en outre des moyens de gestion de données de type USSD (MGT), capables d'établir des canaux de transport de données, de type USSD, avec le serveur, et des moyens de traitement (MT) chargés, lorsqu'ils détectent la composition par l'un des terminaux mobiles (T) d'un numéro d'appel choisi désignant un centre d'appels, de coupler les moyens de gestion de données de type USSD (MGT) au dispositif (D) afin qu'ils établissent un canal de transport de données, de type USSD, entre le dispositif (D) et le serveur de sorte que ce dernier coopère avec le dispositif (D) pour obtenir la position du terminal appelant (T). Par ailleurs, le centre d'appels est chargé, lorsqu'il estime qu'il est nécessaire de localiser le terminal appelant (T), de transmettre au serveur une requête lui demandant de fournir la position du terminal appelant (T) dès qu'il l'a obtenue.

## Description

L'invention concerne le domaine des réseaux cellulaires de communications, et plus précisément la localisation par satellites de terminaux mobiles de communication, rattachés à de tels réseaux, en cas d'appel d'un numéro dédié, éventuellement d'urgence.

On entend ici par « terminal mobile » tout terminal de communication capable d'échanger des données avec un réseau cellulaire, comme par exemple un téléphone mobile, ou un assistant personnel numérique (ou PDA) ou un ordinateur portable équipé d'une interface radio de communication.

Certains numéros d'appel, comme par exemple les numéros d'urgence, permettent à des utilisateurs d'établir des communications avec des centres d'appels (d'urgence), tels que des services de sécurité ou des services gouvernementaux, afin de leur signaler un événement revêtant un caractère prioritaire. C'est notamment le cas du n°112 en Europe ou du n°911 aux Etats Unis d'Amérique.

Dans certaines situations d'urgence, une intervention doit avoir lieu le plus rapidement possible sur le lieu de l'appel. Or, lorsqu'une communication d'urgence est établie, l'appelant peut ne pas disposer de suffisamment de temps pour signaler au centre d'appels d'urgence appelé l'endroit où il se trouve, soit du fait de la situation, soit en raison de l'état de fonctionnement de son terminal de communication, ou bien l'appelant peut omettre de préciser l'endroit où il se trouve. Dans ces situations, et si le centre d'appels d'urgence appelé l'estime nécessaire, une procédure de localisation du terminal appelant doit être mise en oeuvre.

Au moins deux types de procédures de localisation ont été proposés. Un premier type consiste à déterminer l'identifiant de la cellule du réseau cellulaire dans laquelle est situé le terminal appelant. Ce premier type de procédure est particulièrement simple, mais sa précision dépend des dimensions de la cellule dans laquelle est situé le terminal appelant. Cette précision peut être légèrement améliorée par des mesures effectuées par le terminal au sein du réseau et remontées vers ce dernier.

Un second type consiste à utiliser des mesures réseau spécifiques, telles que les mesures dites EOTD (pour « Enhanced Observed Time Difference »), effectuées par le terminal appelant. La mise en oeuvre de ce type de procédure nécessite des aménagements coûteux du réseau, qui n'améliorent pas suffisamment la précision de la localisation.

Par ailleurs, le réseau ne permet pas toujours une transmission (quasi-)simultanée des données audio de la communication et des données représentatives des mesures spécifiques provenant du terminal appelant. C'est notamment le cas dans les réseaux de type GSM ou GSM/GPRS.

Aucun procédé connu n'étant entièrement satisfaisant, l'invention a donc pour but d'améliorer la situation.

Elle propose à cet effet un procédé de localisation de terminaux mobiles de communication rattachés à un réseau cellulaire de communications et comprenant chacun un dispositif de positionnement par satellites assisté, pouvant être couplé à un réseau de positionnement par satellites, lui-même couplé à un serveur de données d'assistance.

On entend ici par « dispositif de positionnement par satellites assisté » un dispositif capable de déterminer la position (ou des données utiles à la détermination de la position) du terminal mobile dans lequel il est implanté à partir de données de navigation fournies par un réseau de positionnement par satellites, de type RNSS (pour « Radio Navigation Satellite Service »), comme par exemple le réseau GPS, ou le réseau GLONASS, ou encore le futur réseau GALILEO, et de données d'assistance fournies par un serveur de données d'assistance couplé au réseau RNSS et au réseau cellulaire auquel est rattaché le terminal mobile.

Le procédé de localisation selon l'invention se caractérise par le fait qu'il consiste, lorsque l'un des terminaux mobiles détecte en interne la composition d'un numéro d'appel choisi, désignant un centre d'appels, à établir un canal de transport de données, de type USSD, entre le dispositif de positionnement du terminal et le serveur de données d'assistance, de sorte que ce dernier coopère avec le dispositif de positionnement pour obtenir la position du terminal appelant, et, lorsque le centre d'appels appelé détecte qu'il est nécessaire de localiser le terminal appelant, à requérir du serveur qu'il transmette la position dès qu'il l'a obtenue.

Deux situations peuvent être envisagées une fois que le canal de transport USSD a été établi :
- soit le terminal appelant transmet au serveur des données représentatives de l'identifiant de la cellule dans laquelle il est situé, de sorte qu'il détermine à partir de celles-ci des données d'assistance représentatives d'identifiants d'au moins trois satellites en vue dans la cellule dans laquelle le terminal appelant est situé, puis transmette au terminal appelant, via le canal de transport USSD, des données représentatives des identifiants déterminés,
- soit le serveur détermine au sein du réseau cellulaire des données représentatives de l'identifiant de la cellule dans laquelle est situé le terminal appelant, afin de déterminer à partir de celles-ci des données d'assistance représentatives d'identifiants d'au moins trois satellites en vue dans la cellule dans laquelle le terminal appelant est situé, puis il transmet au terminal appelant, via le canal de transport USSD, des données représentatives des identifiants déterminés.

Dans l'un ou l'autre cas, lorsque le dispositif reçoit les données d'assistance, il détermine soit la position du terminal dans lequel il est implanté de manière à la transmettre au serveur, automatiquement ou à sa demande, soit les distances qui séparent son terminal de chacun des satellites identifiés, de manière à transmettre au serveur, automatiquement ou à sa demande, via le canal de transport USSD, des données représentatives des distances terminal/satellite déterminées, puis on détermine au niveau du serveur la position du terminal appelant.

De préférence, lorsque le serveur reçoit la requête de localisation avant d'avoir obtenu la position, il attend cette position requise avant de la transmettre au centre d'appels. En revanche, lorsque le serveur reçoit la requête de localisation après avoir obtenu la position, il la transmet immédiatement au centre.

Par ailleurs, les transmissions de données dans le canal de transport USSD s'effectuent par exemple sous la forme de messages dédiés de bout-en-bout et selon un protocole dit « de plan d'utilisateur » (ou « User Plane Protocol »).

L'invention est particulièrement bien adaptée, bien que de façon non exclusive, aux réseaux cellulaires de communications dits 2G, tels que les réseaux GSM.

D'autres caractéristiques et avantages de l'invention apparaîtront à l'examen de la description détaillée ci-après, et des dessins annexés, sur lesquels :
- la figure 1 illustre de façon schématique un exemple de réalisation d'un réseau GSM couplé à un centre d'appels d'urgence et à un serveur de données d'assistance d'une installation de positionnement par satellites assisté, et
- la figure 2 illustre de façon schématique et fonctionnelle un exemple de réalisation d'un terminal mobile selon l'invention.

Les dessins annexés pourront non seulement servir à compléter l'invention, mais aussi contribuer à sa définition, le cas échéant.

L'invention a pour objet de permettre la localisation de terminaux mobiles de communication, rattachés à des réseaux cellulaires de communications, lorsque lesdits terminaux composent des numéros d'appel, éventuellement d'urgence, dédiés.

On entend ici par « terminal mobile », tout type de terminal mobile capable d'échanger des données avec un réseau cellulaire de communications. Il pourra donc s'agir, par exemple, d'un téléphone mobile, ou d'un assistant personnel numérique (ou PDA) ou d'un ordinateur portable équipé d'une interface radio de communication. On considère dans ce qui suit, à titre d'exemple illustratif, que les terminaux mobiles sont des téléphones mobiles.

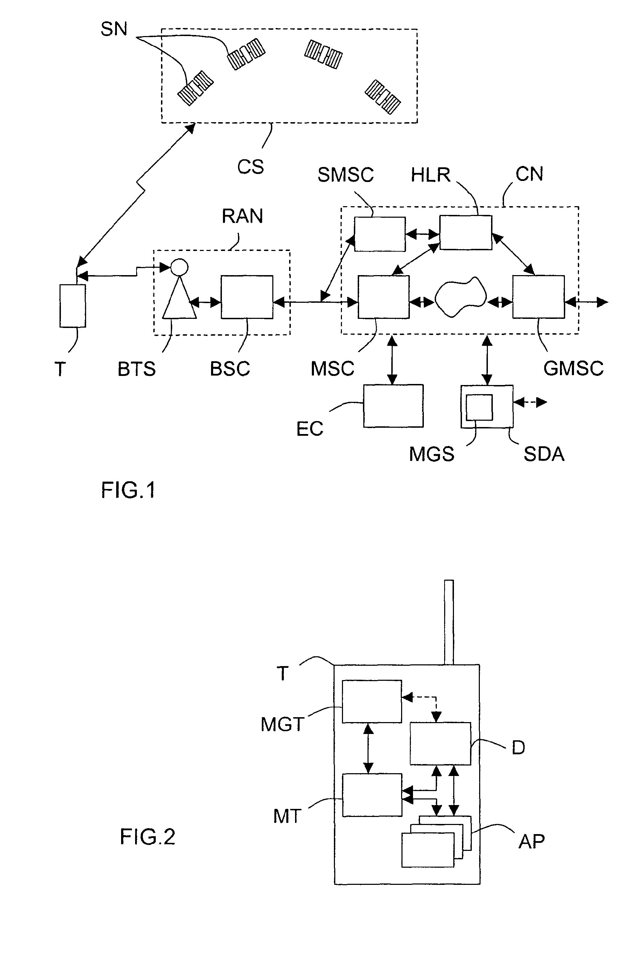

Par ailleurs, comme illustré sur la figure 1, on considère dans ce qui suit, à titre d'exemple non limitatif, que le réseau cellulaire de communications, auquel sont rattachés les terminaux mobiles T, est un réseau de type GSM. Bien entendu, tout autre type de réseau cellulaire est concerné par l'invention, et notamment les réseaux de type GSM/GPRS et UMTS (et tous leurs équivalents).

Le réseau GSM illustré, auquel sont rattachés les téléphones mobiles T, est tout à fait classique. Il peut être résumé, comme illustré sur la figure 1, à un réseau d'accès radio, appelé BSS, et couplé par une interface (appelée A) à un coeur de réseau ou CN (pour « Core Network », ou encore NSS), lui-même éventuellement couplé à un ou plusieurs autres réseaux publics et/ou privés.

Le coeur de réseau CN (ou NSS) comporte tout d'abord un centre de commutation mobile MSC (pour « Mobile Switching Centre ») couplé à l'interface A et chargé de réaliser les opérations nécessaires à la gestion des communications en mode circuit avec les terminaux mobiles T rattachés à son réseau. Ce centre de commutation mobile MSC est éventuellement couplé à un ou plusieurs autres réseaux, fixes ou mobiles, par l'intermédiaire d'une passerelle de commutation GMSC (pour « Gateway MSC »). Le coeur de réseau CN comporte également un centre de commutation de messages appelé SMSC (pour « Short Message Switching Centre »), couplé à l'interface A et chargé de réaliser les opérations nécessaires à la gestion des messages, notamment de type SMS, avec les terminaux mobiles T rattachés à son réseau. Le coeur de réseau CN comporte en outre une base de données appelée HLR (pour « Home Location Register »), contenant des données d'information sur les terminaux mobiles T, tant statiques que dynamiques (dernière localisation connue ou position de la dernière cellule d'appartenance). Les MSC, SMSC et GMSC sont tous couplés au HLR afin de pouvoir obtenir les informations sur les terminaux mobiles, nécessaires à leurs traitements respectifs.

Le réseau d'accès radio BSS comporte généralement, d'une part, plusieurs noeuds ou contrôleurs de réseau radio, appelés BSCs (pour « Base Station Controllers ») et couplés au coeur de réseau CN, via l'interface A, et d'autre part, plusieurs stations de base d'émission/réception, appelées BTS, associées chacune à une ou plusieurs cellules couvrant chacune une zone radio, et couplées seules ou par groupe d'au moins deux à l'un des BSCs via une interface logique appelée Abis.

Selon l'invention, on prévoit également un serveur de données d'assistance SDA couplé, directement ou indirectement, au coeur de réseau CN du réseau GSM et à un réseau de positionnement par satellites CS.

On entend ici par « réseau de positionnement par satellites », un réseau de type RNSS (pour « Radio Navigation Satellite System ») comportant une constellation CS de satellites de navigation SN, comme par exemple le réseau GPS, ou le réseau GLONASS, ou le futur réseau GALILEO, ou encore la combinaison d'au moins deux des trois réseaux précités. Un tel réseau CS est conçu de manière à fournir aux terminaux mobiles T, qui sont équipés d'un dispositif de positionnement par satellites (ou récepteur), des données de navigation leur permettant de déterminer leur position ou bien des paramètres utiles à la détermination de leur position, et notamment les distances qui les séparent de satellites de navigation SN dits « en vue ».

Afin de permettre la mise en oeuvre de l'invention, et comme illustré sur la figure 2, les téléphones mobiles T sont équipés d'un dispositif de positionnement par satellites de type assisté D pouvant être couplé non seulement au réseau de positionnement par satellites CS, mais également au serveur de données d'assistance SDA afin d'être alimenté en données d'assistance facilitant la détermination de position ou bien la détermination de paramètres utiles à la détermination de position.

Dans ce qui suit on considère, à titre d'exemple, que le réseau de positionnement par satellites CS et le serveur de données d'assistance SDA constituent une installation de positionnement par satellites assisté, de type A-GPS (ou « Assisted-GPS »).

L'installation de positionnement par satellites assisté (réseau de positionnement GPS (référencé CS sur la figure 1) et serveur de données d'assistance A-GPS (SDA)), et son fonctionnement global étant tout à fait classiques, ils ne seront pas décrits plus en détail. Les fonctionnements respectifs du réseau GPS (CS) et du serveur de données d'assistance A-GPS associé (SDA), demeurent donc inchangés par rapport à ceux de l'art antérieur. Il est simplement rappelé que le serveur A-GPS (SDA) est chargé de délivrer, sur requête, des données d'assistance représentatives, notamment, des identifiants des satellites de navigation SN qui sont en vue dans la cellule dans laquelle est situé le terminal mobile T objet de la requête, à partir de la position estimée de cette cellule, déduite de son identifiant de cellule (fourni par le réseau GSM ou par le terminal mobile T) et des positions en cours des satellites de navigation SN du réseau GPS.

Des informations complémentaires sur le réseau A-GPS peuvent être trouvées dans le site internet du 3GPP et plus précisément dans l'annexe D du document 3GPP « Location Services (LCS); Functional Description Stage 2 » où elles sont référencées 3GPP TS 03.71 V8.2.0.

Le réseau de positionnement par satellites CS, le serveur de données d'assistance A-GPS SDA et le réseau cellulaire (GSM) constituent ensemble une installation de communications.

L'invention propose un procédé de localisation de téléphones mobiles T consistant, chaque fois que l'un des téléphones mobiles T détecte en interne la composition d'un numéro d'appel choisi (par exemple un numéro d'urgence), désignant un centre d'appels (par exemple d'urgence) EC, à établir un canal de transport de données, de type USSD (pour « Unstructured Supplementary Service Data »), entre son dispositif de positionnement D et le serveur de données d'assistance A-GPS SDA, afin que ce dernier coopère avec le dispositif de positionnement D pour obtenir la position du téléphone mobile appelant T, et, lorsque le centre d'appels (d'urgence) appelé EC détecte qu'il est nécessaire de localiser le téléphone mobile appelant T, à requérir du serveur A-GPS SDA qu'il transmette la position au centre d'appels (d'urgence) EC dès qu'il l'a obtenue.

Par « obtenir » on entend ici aussi bien recevoir du téléphone mobile T, via le canal de transport USSD, des données représentatives de sa position, que déterminer en interne la position du téléphone mobile T à partir des données représentatives des distances téléphone/satellite qu'il a transmises via le canal de transport USSD.

Des informations détaillées sur le formalisme des canaux USSD et les moyens nécessaires à leur mise en oeuvre peuvent être trouvées sur le site internet du 3GPP, et plus précisément dans les spécifications 3GPP TS 22.090 (« Unstructured Supplementary Service Data (USSD) » ― Stage 1), 3GPP TS 23.090 version 4.0.0 Release 4 (« Unstructured Supplementary Service Data (USSD) » - Stage 2), et 3GPP TS 24.090 version 4.0.0 Release 4 (« Unstructured Supplementary Service Data (USSD) » - Stage 3).

Afin que l'invention puisse être mise en oeuvre, il est indispensable, comme illustré sur les figures 1 et 2, que le serveur de données d'assistance A-GPS SDA et le téléphone mobile T soient chacun équipé d'un module de gestion de données de type USSD (MGS, MGT) afin de coopérer à l'établissement, sur requête, d'un canal de transport USSD par échange de signalisation selon un protocole « propriétaire », comme par exemple un protocole dit « de plan d'utilisateur » (ou « User Plane Protocol »).

Un tel canal est destiné à permettre au dispositif D et au serveur A-GPS SDA d'échanger des données sous la forme de messages dédiés de bout-en-bout et selon le protocole de plan d'utilisateur. Ces messages dédiés USSD présentent l'avantage d'être indépendants d'une éventuelle communication de type audio établie entre le téléphone mobile T concerné et le centre d'appels (d'urgence) EC. Ils constituent une chaîne d'octets, généralement d'un maximum de 160 octets, permettant le transfert de caractères, généralement 182 au maximum (comme décrit dans la spécification 3GPP TS 23.038 version 4.4.0 Release 4, « Alphabets and language-specific information »).

On considère dans ce qui suit que le centre d'appels EC est un centre d'appels d'urgence.

Chaque téléphone mobile T selon l'invention dispose d'un module de traitement MT chargé d'analyser les numéros de téléphone (ou identifiants de communication) qu'il utilise pour établir des communications avec d'autres terminaux de communication. Plus précisément, chaque module de traitement MT dispose d'une liste d'au moins un numéro d'appel choisi, dit numéro d'appel d'urgence, qui désigne un centre d'appels d'urgence. Un tel numéro est par exemple le n°112 en Europe ou le n°911 aux Etats Unis d'Amérique.

Lorsqu'un numéro de téléphone est composé au sein d'un téléphone mobile appelant T, son module de traitement MT compare ledit numéro au(x) numéro(s) de la liste, et en cas d'identité il met en relation le module de gestion MGT et le dispositif D de son téléphone mobile appelant T afin que ledit module de gestion MGT établisse une « liaison » avec ce dispositif D, nécessaire à l'établissement d'un canal de transport USSD entre ce dispositif D et le serveur A-GPS SDA.

Puis, le module de gestion MGT initie auprès du coeur de réseau CN l'établissement d'un canal de transport USSD entre le dispositif D et le serveur A-GPS SDA. Le coeur de réseau CN signale ensuite au module de gestion MGS du serveur A-GPS SDA qu'un canal de transport USSD doit être établi entre ledit serveur A-GPS SDA et le dispositif D du téléphone mobile appelant T. Les modules de gestion MGT et MGS échangent alors classiquement des messages de signalisation afin d'établir le canal de transport USSD.

Une fois que le canal de transport USSD a été établi entre un dispositif D et le serveur A-GPS SDA, le dispositif D requiert auprès du serveur A-GPS SDA, via ce canal, des données d'assistance représentatives des identifiants des satellites SN qui sont en vue dans la cellule dans laquelle est situé son téléphone mobile T.

La transmission de ces données d'assistance nécessite cependant que le serveur A-GPS SDA dispose de l'identifiant de la cellule dans laquelle est situé le téléphone mobile appelant T. Cet identifiant peut être fourni soit par le téléphone mobile T, soit par le réseau GSM.

Dans le premier cas, le module de traitement MT du téléphone mobile appelant T détermine en interne l'identifiant de la cellule, l'intègre dans une requête de localisation qu'il transmet au module de gestion MGT afin qu'il la transmette au module de gestion MGS du serveur A-GPS SDA, via le canal de transport USSD.

Cette transmission des données représentatives de l'identifiant de la cellule s'effectue dans le canal de transport USSD sous la forme de messages dédiés de bout-en-bout et selon le protocole propriétaire de plan d'utilisateur.

A réception de l'identifiant de la cellule, le serveur A-GPS SDA détermine la position correspondante de la cellule dans une base de données identifiant/position qui est régulièrement mise à jour par le réseau cellulaire.

Dans le second cas, lorsque le serveur A-GPS SDA reçoit du dispositif D du téléphone mobile appelant T sa demande de données d'assistance, il détermine immédiatement auprès du réseau GSM, et plus précisément auprès du HLR, l'identifiant de la cellule dans laquelle est situé ledit téléphone mobile appelant T. Une fois en possession de cet identifiant il en déduit la position de la cellule par interrogation de la base de données identifiant/position.

Dans l'un ou l'autre cas, le serveur A-GPS SDA détermine de façon classique les identifiants des satellites SN en vue dans la cellule dont il vient de déterminer la position à partir de l'identifiant reçu. Il utilise pour ce faire les positions en cours des satellites SN de la constellation CS du réseau GPS, qu'il récupère à l'aide d'un ou des récepteur(s) de référence fournissant des informations en temps réel sur les satellites SN.

Une fois les identifiants déterminés, le serveur A-GPS SDA génère des données qui les représentent et les transmet au dispositif D, via le canal de transport USSD. Cette transmission, tout comme toute autre transmission survenant entre le dispositif D et le serveur A-GPS SDA s'effectue également sous la forme d'un message dédié USSD, selon le protocole de plan d'utilisateur.

Lorsque le dispositif D reçoit les identifiants des satellites SN en vue dans la cellule où est situé son téléphone mobile T, il n'a plus qu'à se caler classiquement dessus de manière à estimer les distances qui le sépare de quatre d'entre eux (et au minimum trois). Comme le sait l'homme de l'art, cette procédure de calage est beaucoup plus rapide que dans le cas non assisté.

Généralement, lorsque le téléphone mobile T comporte une application interne AP nécessitant sa position à des instants choisis, son dispositif de positionnement assisté D est agencé de manière à déterminer lui-même chaque position à partir des distances téléphone/satellite qu'il a estimées. Le dispositif D fonctionne alors en mode dit « MS-based ». Dans ce cas, une fois que le dispositif D a estimé les distances téléphone/satellite, il détermine la position du téléphone T à partir des dites distances téléphone/satellite.

Mais, le dispositif D peut n'être agencé que pour estimer les distances téléphone/satellite. Il fonctionne alors en mode dit « MS-assisted ». Dans ce cas, une fois qu'il a estimé les distances téléphone/satellite, il les transmet au serveur A-GPS SDA afin qu'il détermine la position du téléphone mobile appelant T.

Comme indiqué précédemment, dans le procédé selon l'invention deux processus se déroulent en parallèle : l'obtention par le serveur A-GPS SDA de la position du téléphone mobile appelant T (décrite ci-avant) et la détermination par le centre d'appels d'urgence appelé EC de l'utilité de l'obtention de la position du téléphone mobile appelant T.

Lorsque le centre d'appels d'urgence EC reçoit l'appel d'urgence du téléphone mobile appelant T, une conversation téléphonique s'instaure entre l'utilisateur du téléphone T et un opérateur du centre d'appels d'urgence EC. L'opérateur doit alors estimer si la situation nécessite l'obtention de la position du téléphone mobile appelant T. En variante ou en complément, le centre d'appels d'urgence EC peut être agencé de manière à décider de façon automatisée de l'utilité d'obtenir la position du téléphone mobile appelant T, par exemple en fonction du numéro d'appel utilisé et/ou d'un code d'identification transmis (le centre EC peut en effet éventuellement gérer les appels destinés à plusieurs services ou administrations). Dans un cas comme dans l'autre, dès qu'il a été estimé que la position du téléphone mobile appelant T devait être obtenue, le centre d'appels d'urgence EC génère une requête à destination du serveur A-GPS SDA, lui demandant de transmettre ladite position. Cette requête est transmise via le réseau GSM.

Deux situations doivent alors être envisagées.

Dans une première situation le serveur A-GPS SDA ne dispose pas encore de la position du mobile appelant T lorsqu'il reçoit la requête transmise par le centre d'appels d'urgence EC. Dans ce cas, le serveur A-GPS SDA attend d'avoir obtenu la position requise avant de la transmettre au centre d'appels d'urgence EC, via le réseau GSM.

Pour obtenir la position du téléphone T, le serveur A-GPS SDA peut transmettre audit téléphone T une requête, éventuellement accompagnée des données d'assistance, via le canal USSD, à réception de la requête émanant du centre d'appels d'urgence EC. Selon que le dispositif D fonctionne en mode MS-assisted ou MS-based, il transmet au serveur A-GPS SDA, en réponse à sa requête, soit les distances téléphone/satellite qu'il a déterminées, soit la position du téléphone T qu'il a déterminée. Si le serveur A-GPS SDA reçoit des données représentatives des distances téléphone/satellite, il détermine alors la position du téléphone T. En variante, on peut envisager que le dispositif D transmette automatiquement au serveur A-GPS SDA des données représentatives des distances téléphone/satellite ou de la position du téléphone T dès lors qu'il a reçu des données d'assistance dans le cadre de l'utilisation du numéro d'appel d'urgence.

Dans une seconde situation le serveur A-GPS SDA dispose déjà de la position du mobile appelant T lorsqu'il reçoit la requête transmise par le centre d'appels d'urgence EC. Cette situation ne peut survenir que dans l'hypothèse précitée où le dispositif D transmet automatiquement au serveur A-GPS SDA les distances téléphone/satellite ou la position du téléphone T qu'il a déterminée(s). Dans ce cas, le serveur A-GPS SDA transmet immédiatement la position requise au centre d'appels d'urgence EC, via le réseau GSM, en réponse à la requête émanant du centre d'appels d'urgence EC.

Préférentiellement, lorsque le centre d'appels d'urgence EC estime qu'il n'est pas utile de déterminer la position du téléphone mobile appelant T, il n'adresse aucune requête au serveur A-GPS SDA. Dans ce cas, soit le serveur A-GPS SDA dispose déjà de la position du téléphone T et il la détruit automatiquement une fois un délai choisi écoulé, soit il n'en dispose pas et dans ce cas rien ne se passe.

Une fois qu'une position a été déterminée et transmise au centre d'appels d'urgence EC, ou bien déterminée puis détruite, le canal de transport USSD correspondant est supprimé.

Des données d'assistance autres que les identifiants des satellites en vue peuvent être transmises par le serveur A-GPS SDA à un dispositif D, soit spontanément, soit à la requête du dispositif D, dès lors qu'elles peuvent être utiles à la détermination des distances téléphone/satellite et/ou à la position du téléphone logeant le dispositif D.

Le module de traitement MT, les modules de gestion USSD MGT et MGS et le dispositif de positionnement par satellites assisté D, peuvent être réalisés sous la forme de circuits électroniques, de modules logiciels (ou informatiques), ou d'une combinaison de circuits et de logiciels.

L'invention est particulièrement avantageuse dans la mesure où elle peut être mise en oeuvre sans modification des réseaux cellulaires, et notamment de leurs architectures et de leurs protocoles.

Par ailleurs, l'invention ne se limite pas aux modes de réalisation d'installation de communications, de terminal mobile de communication, de serveur de données d'assistance et de procédé de localisation décrits ci-avant, seulement à titre d'exemple, mais elle englobe toutes les variantes que pourra envisager l'homme de l'art dans le cadre des revendications ci-après.

Ainsi, dans ce qui précède on a décrit une installation de communications comportant un unique centre d'appels (d'urgence). Mais, l'installation peut en comporter plusieurs dès lors qu'ils sont tous couplés, directement ou indirectement, au serveur de données d'assistance.

Par ailleurs, dans ce qui précède on a décrit une application de l'invention à la localisation en cas d'appel d'urgence. Mais, l'invention s'applique également à la localisation sur requête en cas d'utilisation d'un numéro d'appel dédié. On peut en effet envisager qu'un numéro spécifique soit dédié à l'aide à la navigation, par exemple dans une situation où l'utilisateur du terminal appelant est perdu dans un lieu inconnu ou bloqué dans un embouteillage. Dans ce cas, l'obtention de la position du terminal appelant peut par exemple permettre à une application, externe au serveur de données d'assistance et associée au numéro d'appel spécifique, de guider l'utilisateur afin qu'il trouve son chemin ou qu'il sorte d'un embouteillage. Pour ce faire, une requête USSD doit être déclenchée à partir du terminal mobile consécutivement à la détection du numéro spécifique composé, permettant ainsi de déclencher la procédure de localisation via un canal USSD créé à cet effet, puis la localisation est fournie sur demande à l'application appelée qui en fait la demande auprès du serveur de données d'assistance.

## Revendications

1. Procédé de localisation de terminaux mobiles de communication (T) rattachés à un réseau cellulaire de communications et comprenant chacun un dispositif de positionnement par satellites assisté (D), propre à être couplé à un réseau de positionnement par satellites (CS) couplé à un serveur de données d'assistance (SDA), **caractérisé en ce qu'**il consiste, en cas de détection d'une composition par l'un desdits terminaux mobiles (T) d'un numéro d'appel choisi désignant un centre d'appels, à établir un canal de transport de données, de type USSD, entre le dispositif (D) dudit terminal et ledit serveur (SDA), de sorte que ledit serveur coopère avec ledit dispositif (D) pour obtenir la position dudit terminal appelant, et en cas de détection par ledit centre appelé d'un besoin de localiser ledit terminal appelant, à requérir dudit serveur qu'il transmette ladite position dès qu'il l'a obtenue.

2. Procédé selon la revendication 1, **caractérisé en ce qu'**une fois ledit canal de transport USSD établi, ledit terminal appelant (T) transmet audit serveur (SDA), via ce canal de transport USSD, des données représentatives de l'identifiant de la cellule dans laquelle il est situé, de sorte qu'il détermine à partir de celles-ci des données d'assistance représentatives d'identifiants d'au moins trois satellites (SN) en vue dans la cellule dans laquelle le terminal appelant (T) est situé, puis transmette audit terminal appelant (T), via ledit canal de transport USSD, des données représentatives desdits identifiants.

3. Procédé selon la revendication 1, **caractérisé en ce qu'**une fois ledit canal de transport USSD établi, ledit serveur (SDA) détermine au sein dudit réseau cellulaire des données représentatives de l'identifiant de la cellule dans laquelle est situé le terminal appelant (T), afin de déterminer à partir de celles-ci des données d'assistance représentatives d'identifiants d'au moins trois satellites (SN) en vue dans la cellule dans laquelle le terminal appelant (T) est situé, puis ledit serveur (SDA) transmet audit terminal appelant (T), via ledit canal de transport USSD, des données représentatives desdits identifiants.

4. Procédé selon l'une des revendications 2 et 3, **caractérisé en ce qu'**à réception desdites données d'assistance ledit dispositif (D) détermine la position du terminal (T) dans lequel il est implanté de manière à la transmettre audit serveur (SDA).

5. Procédé selon l'une des revendications 2 et 3, **caractérisé en ce qu'**à réception desdites données d'assistance ledit dispositif (D) détermine les distances qui séparent le terminal (T) dans lequel il est implanté de chacun des satellites (SN) identifiés, de manière à transmettre audit serveur (SDA), via ledit canal de transport USSD, des données représentatives desdites distances déterminées, puis on détermine au niveau dudit serveur (SDA) la position dudit terminal (T).

6. Procédé selon l'une des revendications 4 et 5, **caractérisé en ce que** l'on transmet automatiquement audit serveur (SDA) lesdites données de position ou de distance déterminées.

7. Procédé selon l'une des revendications 4 et 5, **caractérisé en ce que** l'on transmet audit serveur (SDA) lesdites données de position ou de distance déterminées, à sa requête.

8. Procédé selon l'une des revendications 1 à 7, **caractérisé en ce qu'**en cas de réception de ladite requête de localisation avant l'obtention de ladite position, le serveur (SDA) attend ladite position avant de la transmettre audit centre.

9. Procédé selon l'une des revendications 1 à 8, **caractérisé en ce qu'**en cas de réception de ladite requête de localisation après l'obtention de ladite position, le serveur (SDA) transmet immédiatement ladite position audit centre.

10. Procédé selon l'une des revendications 1 à 9, **caractérisé en ce que** lesdites transmissions de données dans le canal de transport USSD s'effectuent sous la forme de messages dédiés de bout-en-bout et selon un protocole dit « de plan d'utilisateur ».

11. Installation de communications comprenant un réseau cellulaire de communications, un réseau de positionnement par satellites (CS) couplé à un serveur de données d'assistance (SDA), couplé audit réseau cellulaire, et des terminaux mobiles de communication (T) couplés audit réseau cellulaire et comprenant un dispositif de positionnement par satellites assisté (D) propre à être couplé audit réseau de positionnement (CS) et audit serveur (SDA),
**caractérisée en ce que** lesdits terminaux comprennent des moyens de gestion de données de type USSD (MGT), propres à établir des canaux de transport de données, de type USSD, avec ledit serveur (SDA), et des moyens de traitement (MT) agencés, en cas de détection d'une composition par leur terminal mobile (T) d'un numéro d'appel choisi désignant un centre d'appels, à coupler lesdits moyens de gestion de données de type USSD (MGT) audit dispositif (D) afin qu'ils établissent un canal de transport de données, de type USSD, entre le dispositif (D) et ledit serveur (SDA) de sorte que ledit serveur coopère avec ledit dispositif (D) pour obtenir la position dudit terminal appelant (T), et **en ce que** ledit centre d'appels (EC) est agencé, en cas de détection d'un besoin de localiser ledit terminal appelant (T), à transmettre audit serveur (SDA) une requête lui demandant de transmettre la position du terminal appelant (T) dès qu'il l'a obtenue.

12. Installation selon la revendication 11, **caractérisée en ce que** lesdits moyens de traitement (MT) du terminal appelant (T) sont agencés, une fois ledit canal de transport USSD établi, pour transmettre audit serveur (SDA), via ce canal de transport USSD, des données représentatives de l'identifiant de la cellule dans laquelle il est situé, et **en ce que** ledit serveur (SDA) est agencé, à réception dudit identifiant de cellule, pour déterminer des données d'assistance représentatives d'identifiants d'au moins trois satellites (SN) en vue dans la cellule dans laquelle le terminal appelant (T) est situé, puis pour transmette audit terminal appelant (T), via ledit canal de transport USSD, des données représentatives desdits identifiants.

13. Installation selon la revendication 11, **caractérisée en ce que** ledit serveur (SDA) est agencé, une fois ledit canal de transport USSD établi, pour déterminer au sein dudit réseau cellulaire des données représentatives de l'identifiant de la cellule dans laquelle est situé le terminal appelant (T), afin de déterminer à partir de celles-ci des données d'assistance représentatives d'identifiants d'au moins trois satellites (SN) en vue dans la cellule dans laquelle le terminal appelant (T) est situé, puis pour transmettre audit terminal appelant (T), via ledit canal de transport USSD, des données représentatives desdits identifiants.

14. Installation selon l'une des revendications 12 et 13, **caractérisée en ce que** ledit dispositif (D) est agencé, à réception desdites données d'assistance, pour déterminer la position du terminal (T) dans lequel il est implanté de manière à la transmettre audit serveur (SDA).

15. Installation selon l'une des revendications 12 et 13, **caractérisée en ce que** ledit dispositif (D) est agencé, à réception desdites données d'assistance, pour déterminer les distances qui séparent le terminal (T) dans lequel il est implanté de chacun des satellites (SN) identifiés, de manière à transmettre audit serveur (SDA), via ledit canal de transport USSD, des données représentatives desdites distances déterminées, et **en ce que** ledit serveur (SDA) est agencé, à réception desdites distances, pour déterminer la position dudit terminal (T).

16. Installation selon l'une des revendications 14 et 15, **caractérisée en ce que** ledit dispositif (D) est agencé pour transmettre automatiquement audit serveur (SDA) lesdites données de position ou de distance déterminées.

17. Installation selon l'une des revendications 14 et 15, **caractérisée en ce que** ledit dispositif (D) est agencé pour transmettre audit serveur (SDA) lesdites données de position ou de distance déterminées, à sa requête.
